# EUROPÄISCHE PATENTANMELDUNG

(11) **EP 2 385 323 A2**
(43) Veröffentlichungstag der Anmeldung: **09.11.2011**
(21) Anmeldenummer: 11159716.7
(22) Anmeldetag: 25.03.2011
(51) Int. Cl.: F24J 2/52

(54) **Gestell zur Befestigung von Solarmodulen**

(30) Priorität: 04.05.2010 DE 202010006442 U
(71) Anmelder: IDEEMATEC Deutschland GmbH, 94574 Wallerfing (DE)
(72) Erfinder: Kufner, Johann, 94527 Aholming (DE)
(74) Vertreter: Schinkel, Reta

(57) **Zusammenfassung**

Gestell zur gemeinsamen Befestigung von zumindest zwei rechteckigen Solarmodulen (7), wobei das Gestell zumindest eine Gruppe aus drei parallelen Schienen (5, 6a, 6b) umfasst, die in definierten Abständen zueinander an einer Tragkonstruktion (2, 4) befestigt sind,
dadurch gekennzeichnet, dass die mittlere der drei Schienen (5) ein Profil mit zu beiden Seiten auskragenden Flanschen (21, 22) aufweist, unter die jeweils eine Kante (12) eines Solarmoduls (7) einlegbar ist,
und dass an den beiden äußeren der drei Schienen (6a, 6b) Klemmelemente (16, 17) anschraubbar sind, mit denen in die mittlere Schiene eingelegte Solarmodule (7) an den beiden äußeren Schienen (6a, 6b) befestigbar sind, und zwar jeweils an den beiden Kanten (13, 14), die an die in die mittlere Schiene eingelegte Kante (12) angrenzen.

## Beschreibung

Die Erfindung betrifft ein Gestell zur gemeinsamen Befestigung von zumindest zwei rechteckigen Solarmodulen an dem Gestell, wobei dieses zumindest eine Gruppe aus drei parallelen Schienen umfasst, die in definierten Abständen zueinander an einer Tragkonstruktion befestigt sind.

Die DE 20 2005 001 469 U1 offenbart eine Vorrichtung zum Anbringen von Solarmodulen auf einer Dachfläche auf in Richtung der Dachneigung verlegten Schienen mit nach oben offenen Kanälen. In die Kanäle können mittels Schrauben Klemmungen befestigt werden, die die Ränder der Solarmodule mit Kragen übergreifen. Das Prinzip dieser Art der Montage wird im Folgenden als Klemm-Montage bezeichnet.

Mit dieser Art der Montage wird eine gute Befestigung der Solarmodule auf den Schienen erreicht. Allerdings muss jede Klemmung einzeln angeschraubt werden.

Die Erfindung hat sich die Aufgabe gestellt, ein Gestell bzw. ein Montagesystem für Solarmodule bereitzustellen, an dem die Solarmodule besonders schnell und kosteneffizient zu montieren sind, und das trotzdem eine feste und wetterbeständige Befestigung erlaubt.

Diese Aufgabe wird gelöst durch ein Gestell nach Anspruch 1. Demnach weist die mittlere der drei Schienen einer Gruppe ein Profil mit zu beiden Seiten auskragenden Flanschen bzw. Kragen auf, unter die jeweils eine Kante eines Solarmoduls einlegbar ist. Diese Art der Befestigung wird als Einlege-Montage bezeichnet. An den beiden äußeren der drei Schienen sind dagegen Klemmelemente anschraubbar, mit denen die in die mittlere Schiene eingelegten Solarmodule an den beiden äußeren Schienen befestigbar sind, und zwar jeweils an den beiden Kanten, die an die in die mittlere Schiene eingelegte Kante angrenzen. Diese Art der Montage wird als Klemm-Montage bezeichnet. Unter "Kante" wird jeweils eine der vier Seiten eines rechteckigen Solarmoduls verstanden.

Die Erfindung zeichnet sich somit damit aus, dass sie das Prinzip der Einlege-Montage mit dem der Klemm-Montage verbindet. Die Einlege-Montage ist prinzipiell schneller, hat jedoch den Nachteil, dass die Schienen hierfür parallel zu zwei gegenüberliegenden Kanten, üblicherweise den Schmalseiten, der Solarmodule verlaufen müssen. Somit werden die Solarmodule lediglich an den äußersten Kanten gehalten, und bei starkem Schneefall kann es unter Umständen zu einem Durchbiegen der Module kommen. Bei der Klemm-Montage können die Schienen dagegen stärker mittig unter den Solarmodulen verlaufen, so dass diese weniger leicht durchbiegen können. Die Erfindung kombiniert nun eine Einlege-Montage an einer Kante mit der Klemm-Montage an den zwei an diese Kante angrenzenden Kanten, und kombiniert somit die Vorteile der Einlege-Montage mit denjenigen der Klemm-Montage.

Bei den Solarmodulen kann es sich um übliche, plattenförmige Photovoltaikmodule handeln. Diese sind oft rechteckig mit einer Größe von beispielsweise etwa 80cm x 250cm, sie sind also oft erheblich länger als breit. Aus diesem Grund ist die erfindungsgemäße Kombination aus Einlege-Montage und Klemm-Montage besonders vorteilhaft, da die Solarmodule nicht über ihre gesamte Länge durchhängen können.

Gemäß einer bevorzugten Ausführungsform ist das Gestell derart ausgelegt, dass die in die mittlere Schiene eingelegte Kante die Schmalseite der rechteckigen Solarmodule bildet. Mit "Schmalseite" ist eine der beiden kürzeren Seiten des Rechtecks gemeint. Vorteilhaft sind dann die Abstände zwischen den drei Schienen jeweils geringer als die Länge der Längsseiten der rechteckigen Solarmodule. Das bedeutet, dass die äußeren beiden der drei Schienen nicht etwa nahe der äußeren Schmalseiten verlaufen, sondern stärker mittig, um die Solarmodule über ihre Länge besser zu unterstützen, um ein eventuelles Durchhängen bei Schneefall zu vermeiden.

Vorzugsweise sind die Abstände zwischen den drei Schienen einer Gruppe um ca. 1/3 bis 1/8 kürzer als die Längsseite eines Solarmoduls. Das bedeutet, dass die beiden äußeren Schienen die Solarmodule etwa in einem Abstand von 1/3 bis 1/8 von den äußeren Schmalseiten unterstützen. Die inneren Schmalseiten sind in die mittlere Schiene eingelegt und somit dort unterstützt. Bei einem Solarmodul von einer Länge von ca. 1,5 m bis 2,8 m kann dies bedeuten, dass die äußeren Schienen in einem Abstand von etwa 30 cm - 50 cm, bevorzugt um die 40 cm, von den äußeren Schmalseiten der Solarmodule verlaufen.

Im Detail umfasst die mittlere Schiene vorzugsweise einen im Profil T-förmig geformten Abschnitt, wobei unter die beiden zu den Seiten auskragenden Flansche des T's jeweils eine Kante eines Solarmoduls einlegbar ist.

Die beiden äußeren Schienen sind bevorzugt anders geformt. Insbesondere sind sie dazu ausgelegt, dass entsprechende Klemmelemente aufgeschraubt werden können, mit denen die Solarmodule festgeklemmt werden können. Gemäß einer bevorzugten Ausführungsform weisen die beiden äußeren Schienen jeweils einen Schraubkanal auf, an dem die Klemmelemente festschraubbar sind. Die Klemmelemente können Randklemmelemente sein, mit denen ein Solarmodul befestigbar ist, oder mittige Klemmelemente, mit denen zwei nebeneinanderliegende Solarmodule mit einem Klemmelement befestigbar sind. Die äußeren Schienen bzw. die Klemmelemente können beispielsweise ausgebildet sein wie in der DE 20 2005 001 469 U1 oder der DE 20 2007 002 232 U1 beschrieben.

Bevorzugt sind die Schienen zumindest im Wesentlichen horizontal ausgerichtet. Insbesondere liegen sie auf einer geneigten Ebene, welche bevorzugt der Sonne zugewandt ist. Vorzugsweise werden die rechteckigen Solarmodule dann hochkant in die mittlere Schiene eingelegt und an den äußeren Schienen angeklemmt.

Die Tragkonstruktion, welche die drei Schienen trägt, kann ein Dach eines Gebäudes sein, oder eine bewegliche Aufständerung, welche dem Azimutwinkel der Sonne nachführbar ist. Vorzugsweise handelt es sich jedoch um eine Festaufständerung, d.h. eine nach Süden ausgerichtete fest am Boden oder auf einem Dach verankerte Tragkonstruktion.

Die Erfindung ist auch auf ein oben beschriebenes Gestell gerichtet, auf dem zumindest zwei, vorzugsweise mehrere rechteckige Solarmodule wie oben beschrieben befestigt sind.

Die Erfindung wird nun anhand eines Ausführungsbeispiels mit Bezug auf die beigefügten Zeichnungen näher erläutert. In den Zeichnungen zeigen:
- Fig. 1: eine perspektivische Darstellung einer Festaufständerung für Solarmodule mit einem erfindungsgemäßen Gestell;
- Fig. 2: eine Draufsicht auf ein erfindungsgemäßes Gestell;
- Fig. 3: einen Querschnitt durch eine mittlere Schiene;
- Fig. 4: einen Querschnitt durch eine äußere Schiene;
- Fig. 5: eine Seitenansicht einer äußeren Schiene.

Gleiche Teile sind in den Zeichnungen mit gleichen Bezugszeichen gekennzeichnet.

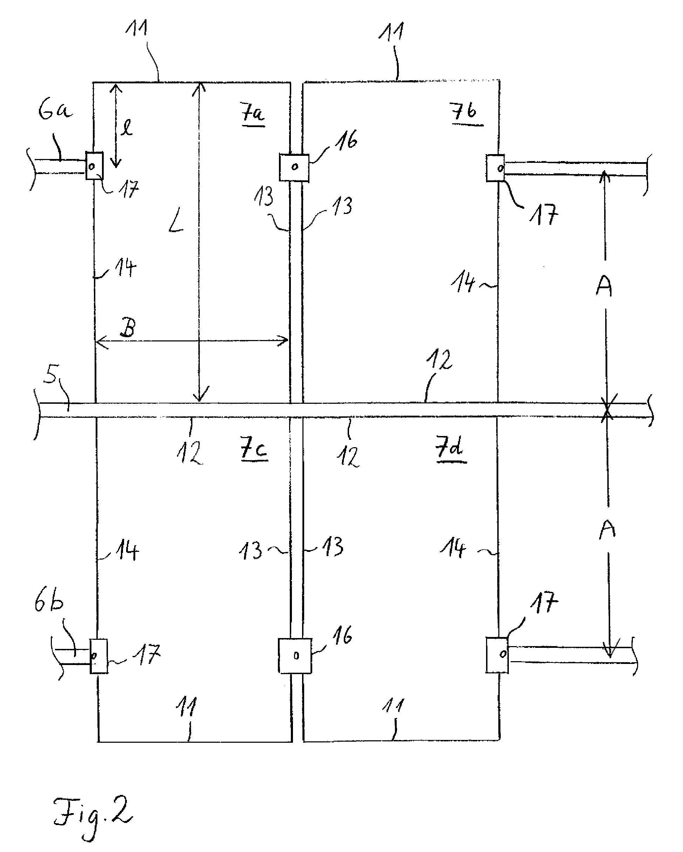

Fig. 2 zeigt eine Festaufständerung für Solarmodule, mit in einer Reihe angeordneten Pfosten 2, die z. B. im Erdboden verankert sind. An jedem Pfosten ist ein sogenannter Querträger 4 befestigt, welcher in Nord-Süd-Richtung ausgerichtet und nach Süden hin mit einem geeigneten Neigungswinkel geneigt ist, um eine optimale Sonneneinstrahlung auf die Solarmodule 7 zu erreichen. Auf die Querträger 6 sind drei zueinander parallele Schienen 6a, 5, 6b befestigt, welche parallel zueinander und etwa horizontal entlang der Aufreihungsrichtung der Pfosten 2 verlaufen. Die Schienen bilden das Kernelement des erfindungsgemäßen Gestells, auf dem eine Reihe von Solarmodulen 7 befestigt sind.

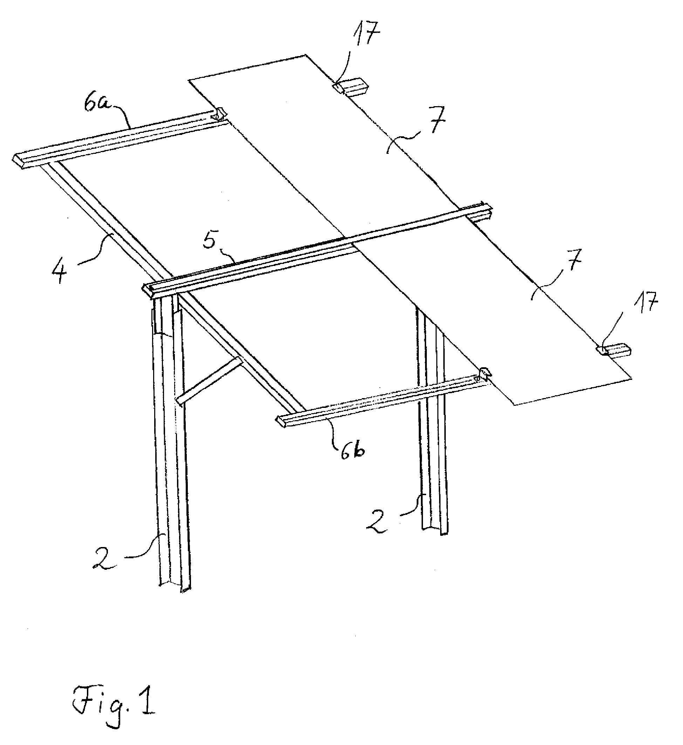

In Fig. 1 sind nur zwei Solarmodule 7 dargestellt, auf einer fertig montierten Solaranlage ist das Gestell komplett mit Solarmodulen 7 bedeckt. Ein derartiges Gestell kann sich über eine lange Reihe aus Pfosten 2 mit Querträgern 4 erstrecken, wobei die Schienen 5, 6a, 6b sich jeweils über zwei oder mehrere Pfosten 2 erstrecken können.

Die mittlere Schiene 5 weist ein derartiges Profil auf, das die Solarmodule 7 jeweils an einer ihrer Kanten dort eingeschoben bzw. eingelegt werden können und dadurch dort gehaltert sind. Auf den äußeren Schienen 6a, 6b liegen die Solarmodule 7 auf und werden dort durch auf die Schienen 6 aufgeschraubte Klemmelemente 17 gehaltert. Da die Solarmodule an den Klemmelementen 17 fest eingeklemmt sind, können sie auch nicht aus der mittleren Schiene 5 herausrutschen. Die äußeren Schienen 6a und 6b stützen die Solarmodule 7 in einer gewissen Entfernung von ihren äußeren Schmalseiten ab. Dies wird durch Draufsicht der Fig. 2 genauer erläutert werden.

Fig. 2 zeigt eine schematische Draufsicht auf eine Gruppe aus drei Schienen 6a, 5 und 6b. Vier Solarmodule 7a, 7b, 7c und 7d sind jeweils mit ihren der mittleren Schiene 5 zugewandten Schmalseiten 12 in diese Schiene eingelegt. Die Solarmodule 7 sind jeweils rechteckig mit einer Länge L von typischerweise 150 - 300 cm, und einer Breite B von typischerweise 60cm - 90cm. Die Solarmodule sind also relativ langgestreckt. Damit sie nicht nur an ihren Schmalseiten 11, 12 unterstützt werden, verlaufen die äußeren Schienen 6a, 6b in einem gewissen Abstand I von den äußeren Schmalseiten 11. Dieser Abstand I ist vorteilhaft ein erheblicher Teil der Länge L eines Solarmoduls, beispielsweise zwischen 1/3 und 1/8, vorzugsweise zwischen ¼ und 1/6, beispielsweise um die 40cm. Dadurch werden die Solarmodule 7 optimal abgestützt, so dass sie auch bei starkem Schneefall nicht durchbiegen. Die Montage ist sehr einfach, da die Solarmodule in die mittlere Schiene 5 lediglich eingelegt werden müssen, und dann jeweils lediglich an zwei Stellen durch entsprechende Klemmelemente 16, 17 an den äußeren Schienen 6a, 6b festgeschraubt werden.

In Fig. 2 sind zwei verschiedene Arten von Klemmelementen dargestellt: Dort, wo die Reihen 7a, 7b bzw. 7c, 7d der Solarmodule enden, wird jeweils ein Rand-Klemmelement 17 verwendet. Dadurch werden die Solarmodule an ihren äußeren Längsseiten 14 eingeklemmt.

An den einander zugewandten Längsseiten 13 können andere Klemmelemente 16 verwendet werden, die sogenannten "mittigen" Klemmelemente. Mit diesen können zwei nebeneinander liegende Solarmodule gleichzeitig an einer Schiene befestigt werden, bevorzugt mit nur einer einzigen Schraube. Dadurch kann die Montage noch schneller und mit noch weniger Arbeitsaufwand erfolgen.

Die Abstände A zwischen den Schienen 6a und 5 bzw. 5 und 6b sind bevorzugt gleich groß und betragen jeweils L-I.

Fig. 2 zeigt somit zwei Reihen von Solarmodulen, eine obere Reihe 7a, 7b und eine untere Reihe 7c, 7d. Die obere Reihe ist mit ihren unteren Schmalseiten 12 in die mittlere Schiene 5 eingelegt und die untere Reihe mit ihren oberen Schmalseiten 12. Es versteht sich, dass jede Reihe typischerweise nicht nur zwei, sondern eine größere Anzahl von Solarmodulen umfasst, die jeweils nebeneinander angeordnet sind.

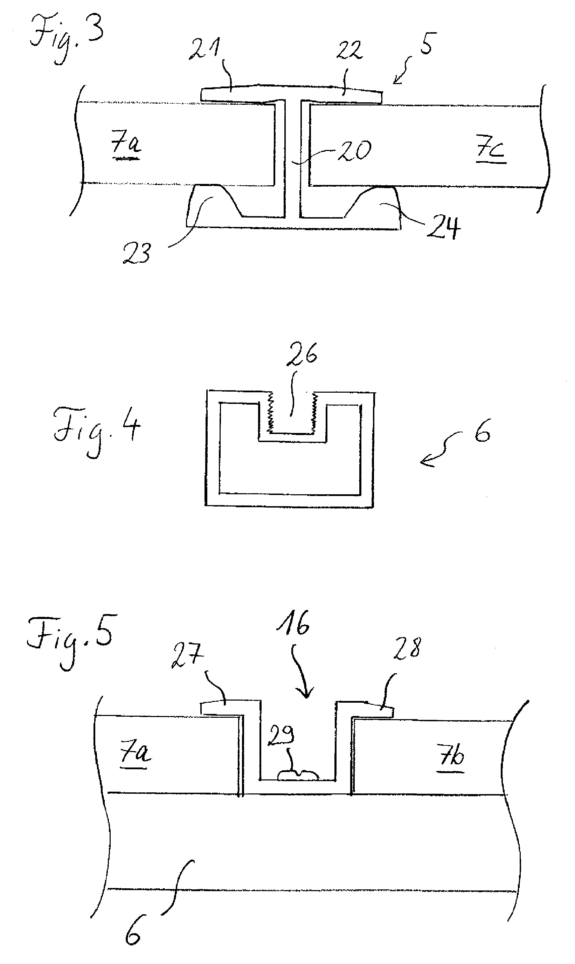

Fig. 3 zeigt einen beispielhaften Querschnitt durch eine mittlere Schiene 5. Die mittlere Schiene 5 ist beispielsweise ein Aluminiumprofil mit einem Mittelsteg 20, an dessen oberen Ende zwei zu den Seiten auskragende Flansche 21, 22 angeordnet sind. Diese umgreifen die Kanten 11 der Solarmodule 7a und 7c, die hier ebenfalls im Querschnitt dargestellt sind.

Nach unten werden die Solarmodule 7 durch entsprechende Wulste 23, 24 abgestützt, die z.B. aus Aluminium oder auch aus Kunststoff oder Gummi sind, so dass die Solarmodule beim Einschieben zwischen Flansch 21 und Wulst 23 bzw. zwischen Flansch 22 und Wulst 24 nicht beschädigt werden. Die Wulste 23, 24 können auch als separate Teile ausgebildet sein, die in unterschiedlichen Höhen hergestellt und auf die mittlere Schiene 5 aufgelegt werde können. Dadurch ist es möglich, unterschiedliche Solarmodulhöhen zu verbauen.

Es versteht sich, dass verschiedene andere Ausformungen der mittleren Schiene 5 ebenfalls geeignet sind, um ein Einlegen der Solarmodule 7 von links bzw. von rechts (in der Darstellung der Fig. 3) zu erlauben.

Fig. 4 zeigt eine einfache Ausführungsform eines Querschnitts einer äußeren Schiene 6. Hierbei kann es sich ebenfalls um ein Aluminiumprofil handeln, welches einen Schraubkanal 26 aufweist. Der Schraubkanal 26 erlaubt, an beliebigen Orten entlang der Länge des Profils 6 eine Schraube einzuschrauben, mit der ein Klemmelement 16, 17 und somit ein Solarmodul 6 befestigt werden kann.

Fig. 5 zeigt eine Schiene 6 mit darauf gehalterten Solarmodulen 7a und 7b von der Seite, bzw. in der Ansicht der Fig. 2 von unten. Die Schiene 6 verläuft horizontal von links nach rechts. Quer zu der Schiene 6 ist ein mittleres Klemmelement 16 aufgesetzt, welches ein Profilstück mit etwa U-förmigem Profil umfasst. An den Enden der Seitenschenkel des U's sind wiederum Flansche 27, 28 angesetzt, welche die Kanten 13 von z. B. den Solarmodulen 7a und 7b umgreifen und diese gegen die Schiene 6 reibschlüssig einklemmen. Das Klemmelement 16 ist durch eine Schraube 29, von der in Fig. 5 nur der Kopf zu sehen ist, am Schraubkanal 26 der Schiene 6 befestigt.

Die Erfindung stellt eine besonders vorteilhafte Hybridmontage bereit, welche sowohl Elemente einer Einlegetechnik, als auch der Klemm-Montage an mehreren parallel zueinander angeordneten Schienen umfasst. Eine Tragkonstruktion kann sowohl eine Gruppe als auch mehrere Gruppen aus jeweils drei Schienen umfassen.

## Patentansprüche

1. Gestell zur gemeinsamen Befestigung von zumindest zwei rechteckigen Solarmodulen (7), wobei das Gestell zumindest eine Gruppe aus drei parallelen Schienen (5, 6a, 6b) umfasst, die in definierten Abständen zueinander an einer Tragkonstruktion (2, 4) befestigt sind,
**dadurch gekennzeichnet, dass** die mittlere der drei Schienen (5) ein Profil mit zu beiden Seiten auskragenden Flanschen (21, 22) aufweist, unter die jeweils eine Kante (12) eines Solarmoduls (7) einlegbar ist,
und dass an den beiden äußeren der drei Schienen (6a, 6b) Klemmelemente (16, 17) anschraubbar sind, mit denen in die mittlere Schiene eingelegte Solarmodule (7) an den beiden äußeren Schienen (6a, 6b) befestigbar sind, und zwar jeweils an den beiden Kanten (13, 14), die an die in die mittlere Schiene eingelegte Kante(12) angrenzen.

2. Gestell nach Anspruch 1, **dadurch gekennzeichnet, dass** die in die mittlere Schiene eingelegte Kante (12) die Schmalseite der rechteckigen Solarmodule (7) bildet.

3. Gestell nach Anspruch 1 oder 2, **dadurch gekennzeichnet, dass** die Abstände (A) zwischen den drei Schiene einer Gruppe gleich groß sind und geringer als die Kantenlänge (L) der Solarmodule in dieser Richtung.

4. Gestell nach Anspruch 3, **dadurch gekennzeichnet, dass** die Abstände (A) zwischen den drei Schiene einer Gruppe um ca. 1/3 bis 1/8 kürzer sind als die Längsseite (L) eines Solarmoduls.

5. Gestell nach einem der vorhergehenden Ansprüche, **dadurch gekennzeichnet, dass** die mittlere Schiene (5) einen im Profil T-förmig geformten Abschnitt umfasst, wobei unter die beiden zu den Seiten auskragenden Flansche (21, 22) des T's jeweils eine Kante (12) eines Solarmoduls einlegbar ist.

6. Gestell nach einem der vorhergehenden Ansprüche, **dadurch gekennzeichnet, dass** die beiden äußeren Schienen (6a, 6b) jeweils einen Schraubkanal (26) aufweisen, an dem die Klemmelemente (16, 17), insbesondere Randklemmelemente (17) oder mittige Klemmelemente (16), festschraubbar sind.

7. Gestell nach einem der vorhergehenden Ansprüche, **dadurch gekennzeichnet, dass** die Schienen (5, 6a, 6b) zumindest im Wesentlichen horizontal ausgerichtet sind.

8. Gestell nach Anspruch 7, **dadurch gekennzeichnet, dass** die Schienen (5, 6a, 6b) auf einer geneigten Ebene liegen.

9. Gestell nach einem der vorhergehenden Ansprüche, **dadurch gekennzeichnet, dass** die Tragkonstruktion ein Dach, eine bewegliche Aufständerung oder eine Festaufständerung (2, 4) ist.
